# EUROPEAN PATENT APPLICATION

(11) **EP 2 602 691 A1**
(43) Date of publication of application: **12.06.2013**
(21) Application number: 11290560.9
(22) Date of filing: 05.12.2011
(51) Int. Cl.: G06F 3/01

(54) **Method for gesture control, gesture server device and sensor input device**

(71) Applicant: Alcatel Lucent, 75007 Paris (FR)
(72) Inventor: De Schepper, Koen, 2640 Mortsel (BE); Van Tilburg, Rudi, 2960 Brecht (BE)
(74) Representative: Michalski Hüttermann & Partner Patentanwälte

(57) **Abstract**

The present invention relates to a method for gesture control of at least one remotely controllable device (11), comprising the steps of receiving information from at least one sensor input device (9, 11, 14) at a gesture server device (1) detecting a gesture within the received information from the at least one sensor input device (9, 11) by the gesture server device (1), and remotely controlling the at least one remotely controllable device (11) according to the detected gesture by the gesture server device (1). The present invention further relates to a gesture server device (1) for performing the above method. The present invention also relates to a sensor input device (9, 11) for providing information to a gesture server device (1), whereby the sensor input device (9, 11) is adapted to provide a detection of an object (10, 11, 12) and/or a movement of a object (10, 11, 12) as information.

## Description

The present invention relates to a method for gesture control of at least one remotely controllable device, a gesture server device performing the afore-mentioned method, and a sensor input device for providing information to a gesture server device.

In the field of gesture recognition, several kinds of devices are known, which can be controlled by gestures. The gestures are for example executed on a touch screen display of the device, which then recognizes the gesture, or are performed without contact to the device, e.g. by a video camera, which is directed towards the user. The video camera can be integral part of the device, or a separate device connected thereto. The devices have algorithms to detect and interpret gestures specifically for their purpose. Gesture control of such devices has proven reliable and is provided for more and more different kinds of devices.

Drawback of existing implementations of gesture control as described above is that each device has to be provided individually with means for gesture control and each device has to implement and execute gesture control algorithms.

Accordingly, it is an object of the present invention to provide a method and a gesture server device for gesture control, which allow applying gesture control to any kind of remotely controllable device and enabling gesture recognition with high reliability. It is a further object of the invention to enable variable gesture control, which has a high level of independence from the way the gesture is performed. Another object of the present invention is to provide a sensor input device for efficiently providing information to the gesture server device and which facilitates the detection of gestures by the above method and the gesture server device.

This object is achieved by the independent claims. Advantageous embodiments are given in the dependent claims.

In particular, the present invention provides a method for gesture control of at least one remotely controllable device, comprising the steps of receiving information from at least one sensor input device at a gesture server device, detecting a gesture within the received information from the at least one sensor input device by the gesture server device, and remotely controlling the at least one remotely controllable device according to the detected gesture by the gesture server device.

The present invention also provides a gesture server device comprising an input connector for receiving information from at least one sensor input device, a processing unit for detecting a gesture within the received information from the at least one sensor input device, and an output connector for remotely controlling the at least one remotely controllable device according to the detected gesture, whereby the gesture server device is adapted to perform the above method.

Furthermore, the present invention provides a sensor input device for providing information to a gesture server device, whereby the sensor input device is adapted to provide a detection of an object and/or a movement of an object as information.

The basic idea of the invention to make gesture detection independent from a particular device, so that gesture control can be applied to any kind of remotely controllable device. Any remotely controllable device can easily be controlled without implementing gesture control on each device individually, and resources for gesture control can be independent from resources of the remotely controllable devices. This enables use of gesture control for devices with low computational power. Battery driven devices can save energy, since no power is required for gesture detection on these devices. The gesture server device is provided as a central device, receiving the information from the at least one sensor input device, detecting the gesture and remotely controlling the at least one remotely controllable device according to the detected gesture. Gestures are defined at the gesture server device, and the information of the at least one sensor input device is also processed by the gesture server device. A communication connection between the gesture server device and the at least one sensor input device is established between an information output connector of the sensor input device and the input connector of the gesture server device. The implementation of this communication connection can be of any suitable kind, including wired and/or wireless communication connections or a combination thereof. The gesture server device controls the remotely controllable device via its output connector. A corresponding control command is sent via a communication connection from the output connector to a control input connector of the remotely controllable device. In accordance with the afore-mentioned communication connection between the sensor input device and the gesture server device, the communication connection between the output connector of the gesture server device and the control input connector of the remotely controllable device can be of any kind. Preferably, the input and output connector of the gesture server device are provided as a combined input/output connector. Although the gesture server device is described here as a single device, the gesture server device can also be implemented having multiple independent devices. In particular, the processing unit can be implemented as a shared processing unit having multiple individual processors, e.g. as a cloud-based processing unit. Sensor input devices can be any kind of devices. Information received from the at least one sensor input device is either information as gathered by the sensor input device, or information as obtained from any kind of pre-processing of the information as gathered by the sensor input device. Such pre-processing can include data compression.

A gesture as specified above refers to any kind of recognition of objects and/or movements of objects, which is suitable to control a remotely controllable device. The object can be a remotely controllable device itself or any other object which is recognizable by an object definition, including human body parts or a human body. Accordingly, such gestures can be performed by humans, e.g. by moving an arm or a hand, by means of a movement of an object or by a combination of recognition of different objects. Such a gesture can be a human located in front of a remotely controllable device, which indicates that the human wishes to use this device. The respective remote control of this device can consist in powering on its screen. Another gesture, which is given here by a way of example, is a movement of an object which is a mobile computing device, e.g. a handheld, tablet or laptop computer, in the direction of a printer as second object to initiate printing of a document currently shown on this mobile computing device.

In a preferred embodiment the step of receiving information from at least one sensor input device at a gesture server device comprises receiving information from at least one video input device, touch screen device and/or RFID-reader device at the gesture server devices. In general, any kind of a sensor input device suitable for recognizing an object can be used. The mentioned sensor input devices are merely examples of suitable sensor input devices. Preferably, the video input device is either a stand-alone video camera or a video camera of any apparatus equipped with a video camera, e.g. a mobile phone, a tablet PC or a TV set. The video input device is adapted to gather information in the form of video images covering any suitable range of wavelengths of light, including visual, ultraviolet and/or infrared light.

According to a preferred embodiment the step of receiving information from at least one sensor input device at the gesture server device comprises receiving information regarding objects recognized by the sensor input device at the gesture server device. Accordingly, the sensor input device performs a pre-processing of its gathered information and provides this pre-processed information to the gesture server device. The pre-processing preferably comprises recognition of objects, which are defined in the sensor input device, and/or recognition of movements of objects. E.g. a video camera device provides merely recognition information of known objects in a video image as information to the gesture server device, which reduces data traffic between the sensor input device and the gesture server device compared to the provisioning of the entire video image. Simple object recognition algorithms can be easily implemented at the video camera device, so that existing apparatuses equipped with a video camera, e.g. a mobile phone, a handheld computer, a tablet PC or a TV set, can perform object recognition based on their build-in video camera devices with low processing load. The recognition of the objects is based on definition data including object definitions stored in the sensor input device. These object definitions can be generic, predefined object definitions.

In a preferred embodiment the method comprises the additional step of providing definition data regarding objects to be recognized from the gesture server device to the sensor input device. The definition data comprises object definition, which can be individual or generic, predefined object definitions. Accordingly, only objects, suitable for performing a gesture, are detected by the sensor input device. For example, if only gestures based on movements of human body parts are defined, recognition of other objects is disabled to increase the performance of the sensor input device. Preferably, the gesture server device only provides definition data suitable for a sensor input device, e.g. object dimension for a video camera device or a RFID-identifier for a RFID-reader device.

In a preferred embodiment the method comprises the additional step of registering the at least one remotely controllable device at the gesture server device, whereby the gesture server device receives information for gesture control from the remotely controllable device. The remotely controllable device can provide different kinds of information for gesture control. First, the remotely controllable device can provide information about supported gestures for performing gesture control, including object definition for objects for performing a gesture and/or movement definition. Second, the remotely controllable device can provide information regarding supported functions, which are remotely controllable. Third, a combination of gesture and associated remotely controllable functions can be provided. Furthermore, when a registered remotely controllable device leaves a coverage area of the gesture server device or is switched off, the remotely controllable device itself and/or the gesture server device can unregister the remotely controllable device. Hence, information for gesture control of the remotely controllable device is removed or deactivated in the gesture server device. The information for gesture control can be provided directly by the remotely controllable device, or the information can be obtained from a different source of information based on a unique identification of the remotely controllable device. E.g. an internet database can be contacted by the gesture server device for receiving information for gesture control for a remotely controllable device based on this unique identification.

According to a preferred embodiment the method comprises the additional step of registering a self-identifying object at the gesture server device, whereby the gesture server device receives an object definition for recognizing the self-identifying object from the self-identifying object. The self-identifying object is merely used for performing a gesture. It can be any kind of object, including a remotely controllable device. The object definition comprises object definition data suitable at least one of kind of sensor input devices. By providing its object definition for being recognized, gesture control can be performed based on this information as described earlier. Hence, a gesture can be defined by moving the self-identifying object in a way defined by a gesture, e.g. by directing the object towards a remotely controllable device for controlling this device. Also the information for recognizing the self-identifying object can be provided directly from the object itself, or from an independent source of information based on a unique identification of the object, as described above.

In a preferred embodiment the self-identifying object comprises at least one sensor input device, and the step of registering a self-identifying object at the gesture server device comprises initiating transmission of information from the at least one sensor input device of the self-identifying object to the gesture server device. Accordingly, also objects, which are not remotely controllable, can-provide information to the gesture server device for improving the detection of gestures. Many kinds of such objects comprise at least one sensor input device, which can be used for gesture control. Accordingly, gesture control can be enabled without the necessity to provide a kind of infrastructure of sensor input devices. For example, objects like nowadays mobile phones, handhelds, tablet PCs, laptops, computers, and TVs are usually provided with different sensor input devices. To apply gesture control to any kind of a remotely controllable device, it is merely required to provide information from the sensor input devices of at least one of the afore-mentioned self-identifying objects to the gesture server device to detect the gestures. The use of sensor input devices of such self-identifying objects can be combined with sensor input devices forming a kind of infrastructure.

According to a preferred embodiment, the gesture server device is adapted to learn objects and/or gestures and/or remote control of remotely controllable devices. The information can be provided via any kind of interface to the gestures server device. Accordingly, also objects and/or remotely controllable devices, which cannot register themselves to the gestures server device, can be used for gesture control.

According to a preferred embodiment, the gesture server device is adapted to perform a training of objects and/or gestures, whereby the processing unit is adapted to identify the received information from the at least one sensor input device as trained object and/or gesture. Preferably, the gesture server device is adapted to assign the trained object to a gesture and/or the trained gesture to remote control of a remotely controllable device. The gesture server device is preferably adapted to perform training of objects and/or gestures in a special operation mode. Accordingly, the method comprises the additional step of training an object and/or a gesture to the gesture server device, and assigning the trained object and/or a gesture to remote control of a remotely controllable device. Essentially, any remotely controllable function of any remotely controllable device can be assigned to a particular gesture. Preferably, training a gesture comprises defining a gesture by means of known or trained objects and assigning this gesture to a remotely controllable function. In a preferred embodiment, training of gestures is performed individually for different users.

According to a preferred embodiment, the method comprises the additional steps of defining a generic gesture in the gesture server device, and defining a gesture in the gesture server device by combining a generic gesture to an object. The object can be of any kind, especially a self-identifying object. An example for such a generic gesture is moving a remotely controllable device towards a printer, e.g. towards the physical location of a printer or any kind of virtual representation of the printer. By combining this generic printing gesture with information regarding the dimensions of this remotely controllable device as object, a particular gesture for printing on this remotely controllable device can be defined. Accordingly, when a video camera device identifies an object corresponding to the remotely controllable device, it provides this information to the gesture server device, which monitors the movement of this device. The gesture server device identifies the printing gesture and controls the remotely controllable device to print a current screen or document.

In a preferred embodiment, the step of detecting a gesture within the received information from the at least one sensor input device at the gesture server device comprises identifying a user, and the step of performing remote control of the remotely controllable device according to the detected gesture by the gesture server device comprises authenticating remote control of the remotely controllable device according to the detected gesture. Accordingly, remote control is limited to authorized users only. For example, a gesture for activating or logging on a remotely controllable device can be made dependent on access rights of a user for this device. Even more preferably, activation or logon can be made dependent on access rights of a user, e.g. a personal computer can be activated with a particular log-in corresponding to the identified user.

The corresponding gesture server device comprises an identity and authorization server for authenticating remote control of the at least one remotely controllable device. The gesture server device can be a single device including the identity and authorization server, or the gesture server device comprises at least one individual device serving as identity and authorization server and one individual device for detecting gestures. The gesture server device can even comprise multiple individual devices for performing different tasks and/or sub-tasks.

In a preferred embodiment the step of detecting a gesture within the received information by the gesture server device comprises processing received information of multiple sensor input devices as combined processing, and detecting a gesture within the received information of multiple sensor input devices. Accordingly, gesture recognition can be performed with high reliability despite limitations due to coverage of sensor input devices, e.g. a limited viewing angle of a video camera device or a limited radio range of a RFID reader device. Preferably, information from multiple video camera devices is combined to provide an overall view of a scene. Even more preferably, the gesture server device can generate a three-dimensional scene based on the information of the multiple video camera devices.

In a preferred embodiment, the input connector and/or the output connector is a network connector for establishing a data connection, especially a wireless network connector. Accordingly, the information provided from the sensor input devices can be provided as an information stream, e.g. as a video stream, via the data connection, or as any kind of pre-processed digital information stream. Preferably, connectivity of sensor input devices and the gesture server device are increased by using a wireless network connector. Input and output connectors can be provided individually or as a combined input/output connector.

The kind of gestures to be recognized by this gesture control method and gesture server device is independent from any kind of gesture control of individual devices. Gesture control is provided for controlling any remotely controllable device and/or for controlling interactions between two or more remotely controllable devices. In one example, a relative geographic position of different remotely controllable devices can be detected by a sensor input device, e.g. a video camera device, and displayed on a touch screen by icons to enable drag and drop of content between the different remotely controllable devices. The content can then be transferred from the one to the other device by any kind of communication connection, either an existing or an explicitly established communication connection. Furthermore, for similar objects, multiple instances can be defined, e.g. by adding a device instance identification. This device instance identification can be realized by means of a bar code or a serial number. In the case of a human user, instances can be distinguished e.g. by a retina scan, a fingerprint scan or reading a badge. Accordingly, one sensor input device can be used to detect the object, and another sensor input device can be provided to identify the instance of this object. In the case of a video camera device as sensor input device, e.g. one camera can cover a room to enable identification of single objects, whereas another video camera device can be used to identify the instance of such objects, e.g. by reading bar codes, serial numbers or retinas. The second video camera device can be a mobile device to be carried along with a user, and/or a steered device that can be directed and zoomed in to detect details. Steering can be realized by the first camera device or the gesture server device. Also a combination of a video camera device for monitoring the room and a different sensor input device for performing the instance identification can be applied, e.g. a RFID reader for reading a badge.

Furthermore, the gesture server device can control the remotely controllable device to facilitate identification and registration of this device or an instance thereof. Preferably, the gesture server device contacts the remotely controllable device, i.e. a single instance of this device, and controls it to generate a visually recognizable signal, e.g. to flash a light, to switch on a display, to show a particular display screen, to light an LED, to provide an infrared or ultraviolet LED signal, preferably with a specific sequence. These signals can be recognized by a video camera device, which can thereby detect the location of an instance of a remotely controllable device. Further, the visually recognizable signals can be used to mark objects for training the gesture server device. Gesture recognition can imply virtual objects, which are e.g. displayed on a screen or another visualization device. These virtual objects can be used for gestures as specified above.

Some embodiments of apparatus and/or methods in accordance with embodiments of the present invention are now described, by way of example only, and with reference to the accompanying drawings, in which:
- Fig. 1: shows a schematic view of a scene and a gesture server device for gesture recognition,
- Fig. 2: shows a diagram for initializing a gesture server device and connected sensor input devices, self identifying objects and remotely controllable devices,
- Fig. 3: shows a diagram for performing gesture control of a log-in gesture, and
- Fig. 4: shows a diagram for performing gesture control of a printing gesture.

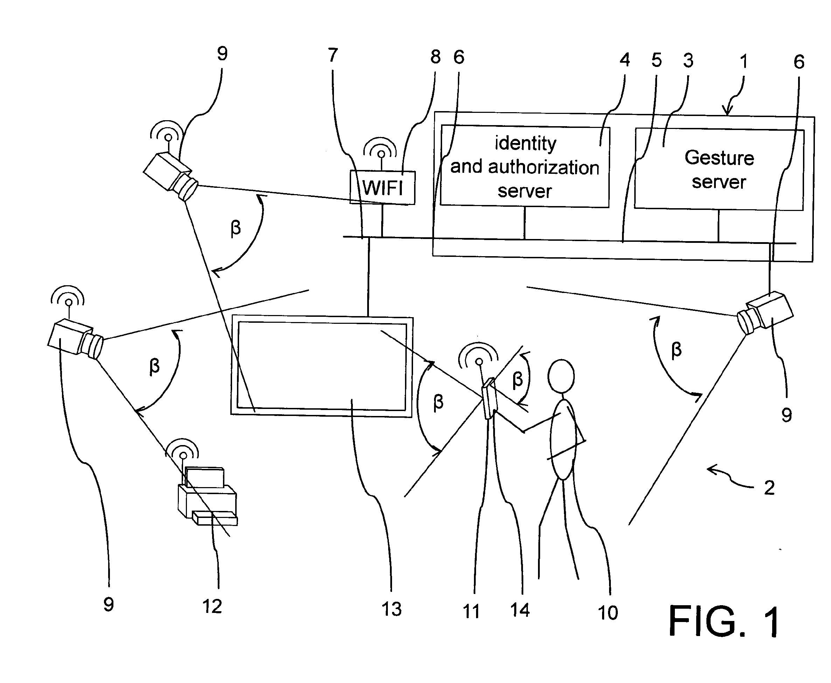

Fig. 1 shows a gesture server device 1 for performing gesture control within a scene 2. The gesture server device 1 comprises a gesture recognition device 3 and an identity and authorization server 4. The gesture recognition device 3 and the identity and authorization server 4 are connected by means of a LAN connection 5. Accordingly, the gesture recognition device 3 and the identity and authorization server 4 in this embodiment are individual devices of the gesture server device 1. The gesture recognition device 3 comprises a processing unit, which is not explicitly shown in the figures.

The gesture server device 1 further comprises two input/output connectors 6, which are connected to the LAN connection 5, and enable establishment of data connections to the gesture server device 1. The network connection 7 comprises a WiFi-device 8, which extends the network connection 7 to a wireless network connection.

A set of three video camera devices 9 is connected to the network connection 7, either via the WiFi-device 8 or directly. Each of the video camera devices 9 has a video camera with viewing angle indicated as β and a processing unit, which are both not explicitly shown in the figures. The video camera devices 9 provide information on a part of the scene 2 according to their respective viewing angle β and form part of an infrastructure for gesture recognition.

The scene 2 comprises a human body 10 of a user holding a tablet-PC 11 with two build-in video cameras, as indicated by the viewing angles β thereof. The tablet-PC 11 is also equipped with a WiFi-module for connection to the network connection 7 via the WiFi-device 8. The tablet-PC 11 can therefore take over functions of a video camera device 9. The scene 2 further comprises a printer 12, connected via the WiFi-device 8 to the network connection 7, and a TV-set 13, which is directly connected to the network connection 7.

Further will be described the operation of the gesture server device 1 and the method executed by the gesture server device 1 in detail.

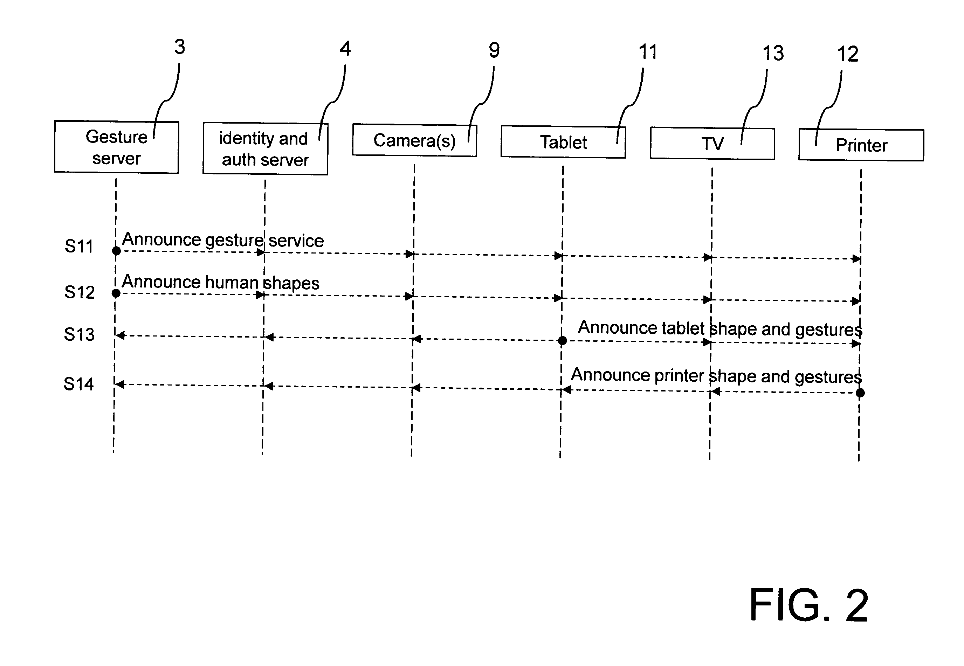

With respect to Fig. 2 is described an initialization and discovery phase of the gesture recognition device 3 with the identity and authorization server 4 and the connected devices 9, 11, 12, 13. Starting with step S11, the gesture recognition device 3 announces the initialization of the gesture service to the identity and authorization server 4 and the connected devices 9, 11, 12, 13.

In step S12, the gesture server 3 starts a registration phase providing object definitions of objects to be recognized including shapes of a human body and human body parts as broadcast to all connected devices 9, 11, 12, 13.

The video camera devices 9 and the tablet-PC 11 receive these object definitions for further use, as described below. In an alternative embodiment, the information regarding the dimensions of objects to be recognized is provided only to devices capable of evaluating visual information.

In step S13, the tablet-PC 11, which has been triggered by the gesture server 3 in step S12, provides information for gesture control to the gesture recognition device 3. In detail, the tablet-PC 11 provides information regarding its dimensions, supported gestures, and remotely controllable functions to the gesture recognition device 3. Accordingly, the tablet-PC 11 is a self-identifying object and a remotely controllable device. The information regarding the dimensions, i.e. an object definition, of the tablet-PC 11 is then provided by the gesture recognition device 3 as broadcast to all connected devices 9, 11, 12, 13. The video camera devices 9 and the table-PC 11 receive this information for further use, as described above. In an alternative embodiment, the tablet-PC 11 provides information regarding its object definition as broadcast to all connected devices 9, 11, 12, 13.

In step S14, the printer 12 registers to the gesture recognition device 3. Accordingly, the gesture recognition device 3 receives information for recognizing the printer 12, i.e. information regarding the dimensions of the printer 12, i.e. an object definition of the printer 12. This information is provided from the gesture recognition device 3 to all connected devices 9, 11, 12, 13. The printer 12 is not remotely controllable in this embodiment, but a self-identifying object 12. In an alternative embodiment, the printer 12 provides information regarding its dimensions as broadcast to all connected devices 9, 11, 12, 13.

After the initialization phase described above, gesture recognition is performed based on information provided by the video camera devices 9 and the tablet-PC 11 acting as sensor input devices. This information consists in the detection of the human body 10, the tablet-PC 11, and the printer 12 as objects by the video camera devices 9 and the tablet-PC 11.

The gesture recognition device 3 receives this information via the network connection 7. The processing unit of the gesture recognition device 3 processes the received information and detects gestures therein. According to the detected gestures, the gesture recognition device 3 controls the remotely controllable devices 11, i.e. the tablet-PC 11, as further described below. The processing of the information received from the video camera devices 9 and the tablet-PC 11 is performed as a combined processing, where a gesture is detected by evaluating the combined processed information.

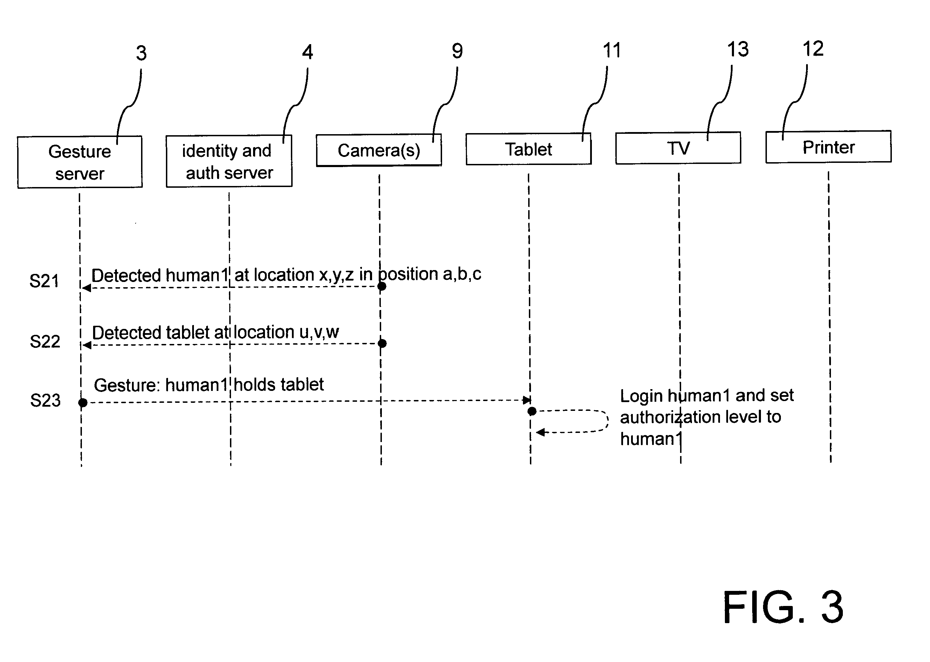

With respect to Fig. 3, a user authentication gesture is described in detail. In step S21, the video camera devices 9 and the tablet-PC 11 provide information to the gesture recognition device 3 indicating that the human body 10 has been detected at a certain location. In step S22, the gesture recognition device 3 receives further information, which indicates, that the tablet-PC 11 has been detected at a location next to the human body 10. Accordingly, the gesture server 3 identifies the gesture of the user holding the tablet-PC 11 to perform a log-in thereon. In step S23, the tablet-PC 11 takes a photo of a face of the user with its video camera facing the user and provides the photo to the identity and authentication server 4, which performs an identification of the user based on the photo by means of face recognition and authorizes the user to the tablet-PC 11.

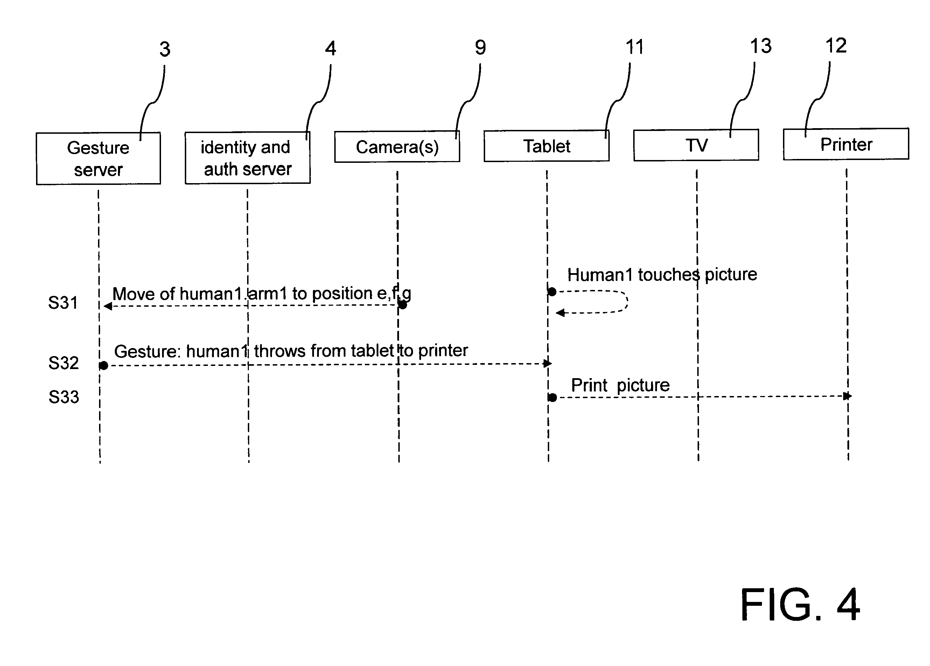

With respect to Fig. 4 will now be described a detection of a gesture for printing as a combined gesture.

In step S31, the user 10 touches a picture shown on a touchscreen 14 at the front side of the tablet-PC 11. Further, the video camera devices 9 detect a movement of an arm of the human body 10 of the user towards the printer 12. The video camera devices 9 provide this detected movement as information to the gesture recognition device 3. Simultaneously, the tablet-PC 11 recognizes a picture touched by the user on the touchscreen 14. In step S32, the gesture recognition device 3 identifies a printing gesture by the movement of throwing the tablet-PC 11 towards the printer 12. The gesture recognition device 3 controls the tablet-PC 11 to perform a printing operation. The tablet-PC 11 in step S33 executes the printing command under consideration of the selected picture in step S31, and sends the picture to be printed to the printer 12. In an alternative embodiment, the tablet-PC 11 also provides information from the touchscreen 14 to the gesture recognition device 3, which evaluates this information for gesture detection.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the FIGs., including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. A method for gesture control of at least one remotely controllable device (11), comprising the steps of
receiving information from at least one sensor input device (9, 11, 14) at a gesture server device (1),
detecting a gesture within the received information from the at least one sensor input device (9, 11) by the gesture server device (1), and
remotely controlling the at least one remotely controllable device (11) according to the detected gesture by the gesture server device (1).

2. The method according to claim 1, **characterized in that**
the step of receiving information from at least one sensor input device (9, 11) at a gesture server device (1) comprises receiving information from at least one video input device (9), touch screen device (14) and/or RFID-reader device at the gesture server device (1).

3. The method according to claim 1, **characterized in that**
the step of receiving information from at least one sensor input device (9, 11) at the gesture server device (1) comprises receiving information regarding objects (10, 11, 12) recognized by the sensor input device (9, 11) at the gesture server device (1).

4. The method according to claim 3, **characterized in that** the method comprises the additional step of
providing definition data regarding objects (10, 11, 12) to be recognized from the gesture server device (1) to the sensor input device (9, 11).

5. The method according to claim 1, **characterized in that** the method comprises the additional step of
registering the at least one remotely controllable device (11) at the gesture server device (1), whereby the gesture server device (1) receives information for gesture control from the remotely controllable device (11).

6. The method according to claim 1, **characterized in that** the method comprises the additional step of
registering a self-identifying object (11, 12) at the gesture server device (1), whereby the gesture server device (1) receives an object definition for recognizing the self-identifying object (11, 12) from the self-identifying object (11, 12).

7. The method according to claim 6, **characterized in that**
the self-identifying object (11, 12) comprises at least one sensor input device (9, 11), and
the step of registering a self-identifying object (11, 12) at the gesture server device (1) comprises initiating transmission of information from the at least one sensor input device (9, 11) of the self-identifying object (11, 12) to the gesture server device (1).

8. The method according to claim 1, **characterized in that** the method comprises the additional steps of
defining a generic gesture in the gesture server device (1), and
defining a gesture in the gesture server device (1) by combining a generic gesture to an object (10, 11, 12).

9. The method according to claim 1, **characterized in that** the method comprises the additional step of
training an object (10, 11, 12) and/or a gesture to the gesture server device (1), and
assigning the trained object (10, 11, 12) and/or a gesture to remote control of a remotely controllable device (11).

10. The method according to claim 1, **characterized in that**
the step of detecting a gesture within the received information from the at least one sensor input device (9, 11) at the gesture server device (1) comprises identifying a user, and
the step of performing remote control of the remotely controllable device (11) according to the detected gesture by the gesture server device (1) comprises authenticating remote control of the remotely controllable device (11) according to the identified user.

11. The method according to claim 1, **characterized in that**
the step of detecting a gesture within the received information by the gesture server device (1) comprises
processing received information of multiple sensor input devices (9, 11) as combined processing, and
detecting a gesture within the received information of multiple sensor input devices (9, 11).

12. A gesture server device (1) comprising
an input connector (6) for receiving information from at least one sensor input device (9, 11),
a processing unit for detecting a gesture within the received information from the at least one sensor input device (9, 11), and
an output connector (6) for remotely controlling the at least one remotely controllable device (11) according to the detected gesture, whereby
the gesture server device (1) is adapted to perform the method according to any of the preceding method claims.

13. The gesture server device (1) according to claim 12, **characterized in that**
the gesture server device (1) comprises an identity and authorization server (4) for authenticating remote control of the at least one remotely controllable device (11).

14. The gesture server device (1) according to claim 12, **characterized in that**
the gesture server device (1) is adapted to perform a training of objects (10, 11, 12) and/or gestures, whereby
the processing unit is adapted to identify the received information from the at least one sensor input device (9, 11) as trained object (10, 11, 12) and/or gesture.

15. A sensor input device (9, 11) for providing information to a gesture server device (1), whereby
the sensor input device (9, 11) is adapted to provide a detection of an object (10, 11, 12) and/or a movement of a object (10, 11, 12) as information.
